(19) **Europäisches Patentamt**

**European Patent Office**

**Office européen des brevets**

(11) **EP 0 532 535 B2**

(12) # NEW EUROPEAN PATENT SPECIFICATION

(45) Date of publication and mention
of the opposition decision:
**09.07.2003 Bulletin 2003/28**

(45) Mention of the grant of the patent:
**14.02.1996 Bulletin 1996/07**

(21) Application number: **91909631.3**

(22) Date of filing: **23.05.1991**

(51) Int Cl.$^7$: **C01B 11/02**, C25B 15/08

(86) International application number:
**PCT/CA91/00175**

(87) International publication number:
**WO 91/018830 (12.12.1991 Gazette 1991/28)**

(54) **ELECTROCHEMICAL PRODUCTION OF ACID CHLORATE SOLUTIONS**

ELEKTROCHEMISCHE HERSTELLUNG VON SAUREN CHLORATLOESUNGEN

PRODUCTION ELECTROCHIMIQUE DE SOLUTIONS ACIDES DE CHLORATE

(84) Designated Contracting States:
**AT BE CH DE DK ES FR GB GR IT LI LU NL SE**

(30) Priority: **07.06.1990 CA 2018507**
**19.04.1991 US 687741**

(43) Date of publication of application:
**24.03.1993 Bulletin 1993/12**

(73) Proprietor: **Sterling Canada, Inc.**
**Houston, Texas 77002-4312 (US)**

(72) Inventors:
• **COWLEY, Gerald**
**Mississauga L5C 1Z7, ON (CA)**
• **LIPSZTAJN, Marek**
**Rexdale M9V 4K2, ON (CA)**
• **TWARDOWSKI, Zbigniew**
**Mississauga L4W 3K5, ON (CA)**
• **SWINDELLS, Richard**
**Caledon L0N 1C0, ON (CA)**

• **BECHBERGER, Edward, J.**
**Etobicoke M9C 3L3, ON (CA)**

(74) Representative: **W.P. THOMPSON & CO.**
**Eastcheap House**
**Central Approach**
**Letchworth, Hertfordshire SG6 3DS (GB)**

(56) References cited:
**EP-A- 0 353 367       WO-A-91/12356**
**US-A- 2 376 935       US-A- 3 810 969**
**US-A- 4 129 484       US-A- 4 798 715**
**US-A- 4 915 927**

• **Chemie, Ing.Tech. 61(1989), Nr. 12, p. 933-935**

Remarks:
The file contains technical information submitted after the application was filed and not included in this specification

EP 0 532 535 B2

**Description**

FIELD OF INVENTION

The present invention relates to the electrochemical processing of agueous solutions to produce acidic media for a plurality of applications, in particular in the production of chlorine dioxide.

BACKGROUND TO THE INVENTION

Chlorine dioxide, useful as a pulp mill bleaching agent, is produced chemically by reduction of an acid aqueous chlorate solution in accordance with the equation:

$$ClO_3^- + 2H^+ + e^- \rightarrow ClO_2 + H_2O$$

where the electron $e^-$ is supplied by various reducing agents, for example, methanol, chloride ion and hydrogen peroxide. In many commercial processes for effecting this reaction, the acidity for the process is provided by sulfuric acid while the chlorate ions are provided by sodium chlorate. The presence of these species leads to the formation of some form of sodium sulfate as a by-product.

One particular embodiment of a commercial process is the so-called "R8" process of the applicant of this application, as described in U.S. Patent No. 4,081,520, assigned to the applicant herein. Improvements in and modifications to that process also are described in the applicant's U.S. Patents Nos. 4,465,658, 4,473,540 and 4,627,969.

In that chlorine dioxide generating process, the reaction medium is at a high total acid normality of sulfuric acid and is maintained at its boiling point under a subatmospheric pressure applied thereto. Methanol is used as a reducing agent for chlorate ions, resulting in the formation of chlorine dioxide in a substantially pure form. The boiling nature of the reaction medium produces steam which acts as a diluent for the gaseous chlorine dioxide, so as to prevent decomposition of the chlorine dioxide.

The sodium sulfate by-product builds up in the reaction medium after start-up until the solution is saturated with sodium sulfate, whereupon the sodium sulfate precipitates from the reaction medium. A slurry of the sodium sulfate is removed from the reaction vessel, the crystalline sodium sulfate is filtered therefrom and the mother liquor is recycled to the reaction zone after the addition of make-up quantities of sodium chlorate, sulfuric acid and methanol.

This process is highly efficient and rapidly produces chlorine dioxide in commercial quantities. As may be concluded from the above equation, for each mole of chlorine dioxide produced a mole of chlorate ion and hence of sodium ion is introduced to the reaction medium. The sodium ions combine with the sulfate ions introduced with the sulfuric acid, to produce a sodium sulfate, which may be sodium bisulfate or, more normally under the conditions of an R-8 process, the double salt sodium sesquisulfate, i.e., $Na_3H(SO_4)_2$ (or $NaHSO_4.Na_2SO_4$), depending on the acidity of the solution.

Another sulfuric acid-based chlorine dioxide generating process, a low acidity "R3" process, as described in the applicant's U.S. Patent No. 3,864,456, produces neutral sodium sulfate as the by-product.

Such by-product sodium sulfate and sodium sesquisulfate (sometimes termed "saltcake"), generally have been employed to make up sulfur losses in the pulp mill.

However, the adoption of high substitution of chlorine by chlorine dioxide in the chlorination stage of the bleach plant has led to saltcake by-product production from the chlorine dioxide generating process exceeding the mill make-up requirements.

There exists a need, therefore, for a chlorine dioxide generating process which possesses the attributes of, for example, the R8 process, while, at the same time, producing less sodium sulfate by-product for the same level of production of chlorine dioxide. It is even more advantageous if, in addition to a lower saltcake production, caustic soda solution is co-produced together with $ClO_2$, thus minimizing an $NaOH/Cl_2$ imbalance presently existing in pulp mills.

It has previously been suggested in U.S. Patent No. 4,129,484 to treat aqueous effluent from chlorine dioxide generating processes electrolytically to form an acid-enriched fraction from the original solution, which then may be recycled to the chlorine dioxide generator.

In order to utilize the by-product saltcake, it was proposed in the prior art to employ an electrochemical process to convert sodium sulfate into sulfuric acid and caustic soda solution in a three-compartment electrolytic cell, equipped with a cation-exchange membrane facing the cathode and an anionic membrane or a diaphragm facing the anode, wherein the saltcake solution is fed to the middle compartment. In an electric field, sodium and sulfate or hydrogen sulfate ions are transferred to the cathodic and anodic compartments respectively where they recombine with electrolytically-generated hydroxyl and hydrogen ions to form caustic soda and sulfuric acid, respectively.

Analogously, in a simplified process, a two-compartment electrolytic cell equipped with a cation exchange membrane was proposed to generate a mixture of sulfate and sulfuric acid in an anodic compartment along with caustic soda solution in the cathodic compartment.

The main drawback of these prior proposals was that the sulfuric acid solution produced had a low acid strength (less than 10 wt% $H_2SO_4$), which imposes an excessive evaporative load on the chlorine dioxide generator, thereby rendering the process uneconomical and impractical.

Although higher sulfuric acid concentrations can be achieved in the electrochemical splitting of saltcake in the manner described in the prior art, the current efficiency for such a process is prohibitively low due to the leakage of $H^+$ ions through the ion-exchange membrane. Such migration of hydrogen ions towards the cathode is related to a very high mobility of this ion relative to $Na^+$ ions.

For example, in the aforementioned U.S. Patent No. 4,129,484, current efficiencies as low as 9% for production of about 1 normal caustic soda solution and 39% for production of about 2M sulfuric acid were reported.

In a similar process, described in U.S. Patent No. 4,115,217, such electrochemical processing of sodium sulfate may be combined with electrochemical production of sodium chlorite in a cathode compartment by electroreduction of chlorine dioxide.

## SUMMARY OF INVENTION

The scope of the present invention is defined in the claims, to which reference should now be made.

In order to counteract the undesired migration of hydrogen ions towards the cathode and hence maximize the current efficiency for an acidification process, the electrolytic process is effected, in accordance with the invention, while maintaining a high concentration ratio of $Na^+/H^+$ in the anolyte.

In one embodiment the present invention involves an electrochemical process for the treatment of sodium sulfate/sodium chlorate mixtures, so as to acidify the same and provide acid for the chlorine dioxide generating process, while coproducing aqueous sodium hydroxide solution. Although the co-production of aqueous sodium hydroxide solution is most desired for the pulp mill applications, any other suitable cathodic reactions, for example, an electroreduction of oxygen to hydrogen peroxide and sodium hydroxide and others described below, can be carried out in combination with the anodic acidification of the salt mixtures.

The invention is broadly directed to the treatment of aqueous solutions of mixtures of certain alkali metal salts to form an aqueous acidified medium.

In one aspect, the present invention is broadly directed to a method for the production of an aqueous acidified chlorate ion-containing solution which is used as a feed stream for a chlorine dioxide generating process.

An aqueous solution of a mixture of alkali metal chlorate and alkali metal sulfate is electrochemically acidified. This aqueous solution is prepared from solid phase materials.

Alkali metal ions are electrochemically removed from the aqueous solution to produce an acidified alkali metal salt solution which constitutes the aqueous acidified chlorate ion-containing solution.

One manner of effecting the procedure employs an electrolytic cell comprising a cation-exchange membrane dividing the cell into an anode compartment and a cathode compartment. The aqueous solution of alkali metal salts is fed to the anode compartment and hydrogen ions are electrolytically produced in the anode compartment while alkali metal ions are transferred from the anode compartment through the cation-exchange membrane to the cathode compartment. The acidified alkali metal salt solution is removed from the anode compartment.

Alternatively, any other oxidation reaction producing hydrogen ions, for example, hydrogen gas oxidation to hydrogen ions, may be employed as an anodic reaction. Such anodic hydrogen gas oxidation may be combined with oxygen gas electroreduction as a cathodic reaction, to provide a fuel cell operation wherein, in addition to acidification of anolyte and production of alkali metal hydroxide solution in the catholyte, electrical energy is generated.

When an anodic oxidation of hydrogen gas to hydrogen ions is combined with a cathodic reduction of water to hydroxyl ions and hydrogen gas, the latter gas may be used as an anodic feed and, at the same time, a substantial energy savings may be achieved, as a result of the difference in electrochemical reaction potentials. Similarly, an analogous energy and material savings is achieved when an anodic oxidation of water to hydrogen ions and oxygen is combined with cathodic reduction of the oxygen gas stream.

In one embodiment the present invention involves an electrochemical process for the treatment of an aqueous solution of alkali metal salt mixtures, which comprises a plurality of steps. In one embodiment the aqueous solution is fed to the anode compartment of an electrolytic cell having a cation-exchange membrane dividing the cell into an anode compartment and a cathode compartment.

Hydrogen ions are electrolytically produced in the anode compartment and hydroxyl ions are electrolytically produced in the cathode compartment. Simultaneously alkali metal cations are transferred across the cation-exchange membrane from the anode compartment to the cathode compartment.

This migration of alkali metal cations and the electrochemical reaction producing hydrogen ions and hydroxyl ions have the effect of producing an alkali metal hydroxide solution in the cathode compartment and an acid of the anion of the alkali metal salts in the anode compartment. The respective aqueous solutions are removed from the compartments of the cell.

In order to achieve high current efficiencies of at least about 70%, preferably at least about 80%, and thereby provide an economic process, the molar ratio of $[Na^+]:[H^+]$ in the anolyte varies from 1000:1 to 1:2, throughout the electrolytic reaction. In a preferred aspect of the invention, an improved current efficiency is achieved by controlling hydroxyl ion back-migration from the cathode compartment through the cation-exchange membrane to the anode compartment.

In the present invention, the method for the production of aqueous acidified chlorate ion-containing solution is integrated into a chlorine dioxide generating process by providing an aqueous acid chlorine dioxide-generating reaction medium containing sulfuric acid and alkali metal ions in a reaction zone, feeding the aqueous acidified chlorate ion-containing solution to the reaction zone to provide chlorate ion and hydrogen ion reactants to the aqueous acid chlorine dioxide-generating reaction medium, and recovering an alkali metal sulfate from the reaction zone.

BRIEF DESCRIPTION OF DRAWINGS

Figure 1 is a flow sheet of a chlorine dioxide generating process provided in accordance with one embodiment of the invention;

Figure 2 is a schematic illustration of a bipolar membrane cell which may be employed with the chlorine dioxide generating process of Figure 1;

Figure 3 contains a graphical representation of experimental data, illustrating the relationship of acid normality to current efficiency for different concentrations of alkali metal salt; and

Figure 4 contains a further graphical representation of experimental data, illustrating the relationship of acid normality to current efficiency for different catholytes.

GENERAL DESCRIPTION OF INVENTION

As noted above, the present invention is directed generally to the electrochemical treatment of aqueous solutions of mixtures of alkali metal salts and to generate an aqueous acidified medium. The procedure of the present invention is useful in sulfuric acid-based chlorine dioxide generating processes, since the invention enables the quantity of by-product alkali metal sulfate co-produced with the chlorine dioxide to be decreased and even eliminated entirely, while maintaining the same level of chlorine dioxide production.

In one embodiment of the present invention, an aqueous solution of a mixture of alkali metal chlorate and alkali metal sulfate is introduced to the anode compartment of a cation-exchange membrane divided electrochemical cell and alkali metal ions are transferred from the anode compartment to the cathode compartment. This procedure may be used in the present invention in different ways to achieve the decreased alkali metal sulfate output in a chlorine dioxide generating process. It is usual for chlorine dioxide generating processes to employ sodium salts, and hence in the following description of specific embodiments of the invention reference will be made to those sodium salts. However, it is apparent that the principles of the invention are applicable to salts of other alkali metals.

In a preferred embodiment of the invention, a combination of sodium chlorate and sodium sulfate, in the form of sodium sesquisulfate is fed to the anode compartment of the cell, since the presence of both salts enables the $[Na^+]/[H^+]$ molar ratio in the anode compartment to be maximized, resulting in a high current efficiency and thereby lower power consumption. In addition, a higher overall current efficiency decreases the capital cost, since a lesser number of cells is required for the same production rate.

It is preferred to employ a saturated feed solution or a slurry, in order to minimize the resistance of the electrolyte, while maintaining a high $[Na^+]/[H^+]$ ratio in the anode compartment. When the feed is in the form of a slurry, it usually is preferred to provide an additional separator or separators, such as an ion-exchange membrane or a diaphragm, between the feed stream and the anode to prevent abrasion and wear on the anode from occurring.

Such additional separator also may be employed, if desired, when the feed does not comprise a slurry. Such an arrangement is useful when employing sulfuric acid circulated in the anode compartment and a DSA-O$_2$® anode, since such anodes exhibit a longer life than when contacting mixtures of sulfuric acid and sodium sulfate.

The cell produces an acidified solution from the mixed sodium chlorate/sodium sulfate feed in the anode compartment and a sodium hydroxide solution in the cathode compartment. The acidified solution then is fed to the chlorine dioxide generating process as an acid and chlorate source therefor.

When there is no need for the saltcake in particular pulp mill, it is preferred to operate the cell so as to remove from the mixed sodium chlorate/sodium sulfate feed a quantity of sodium ions corresponding to the quantity of sodium ions introduced with the sodium chlorate. The requirements of the chlorine dioxide generator for acid and chlorate thereby are completely satisfied, so that no additional sodium sulfate by-product is formed. Therefore, in effect, a dead load of sodium sulfate cycles between the chlorine dioxide generator and the cell.

When operating the process of the invention with sodium chlorate/sodium sulfate mixtures, it is preferred to dissolve sodium chlorate in the sodium sulfate solution. Alternatively, the sodium sulfate, in slurry or crystalline form, may be added to an aqueous sodium chlorate solution or, if desired, aqueous solutions of sodium sulfate and sodium chlorate may be mixed in any required proportion.

The composition of the anolyte feed may be prepared by a one-time mixing of the individual components, namely sodium sulfate and sodium chlorate. In fact, the process can be carried out in such a way that neutral sodium sulfate or sodium sesquisulfate is acidified to bisulfite, $NaHSO_4$, and then this solution is used to dissolve sodium chlorate, in order to take advantage of an increased solubility of bisulfate with respect to other sulfates. The mixture can be forwarded to the generator or further acidified in an electrolytic cell.

From this discussion, it will be apparent that any combination of sodium sulfate and sodium chlorate may be selected to meet the requirements of a particular pulp mill. Production of sodium sulfate by-product may be permitted at any level desired by the pulp mill.

The presence of sodium sulfate (sesquisulfate) in the anolyte improves the $[Na^+]/[H^+]$ ratio not only due to an increase in sodium ion concentration but also as a result of a buffering action of the sulfate ions, which tend to recombine with hydrogen ions to form bisulfate, thereby decreasing the concentration of free hydrogen ions. In addition, a combined acidified chlorate/sulfate feed effectively decreases the amount of water introduced to the chlorine dioxide generator, as a result of a water "sharing" effect.

Operating the process using sodium chlorate/sodium sulfate mixtures provides a practically unlimited flexibility in selecting the extent of production of a by-product saltcake corresponding to between 0 to 100% recycling of sulfate.

The aqueous sodium hydroxide solution which is co-produced in one embodiment of the present invention is readily used by the pulp mill in its bleach plant operations for the purification of bleached pulp. When pulp mills have an on-site electrolytic process for producing aqueous sodium hydroxide, usually from sodium chloride, Such process results in the co-production of chlorine. The ability to utilize such co-produced chlorine, however, is often limited, which leads to a caustic/chlorine imbalance in the pulp mill. By utilizing this embodiment of the process of the invention, not only is the problem of co-production of excess sodium sulfate in the chlorine dioxide generation process overcome, but also the problem of co-production of chlorine in sodium hydroxide production is overcome. The concentration of sodium hydroxide solution produced in the cathode compartment may be adjusted to any reasonable level, by adjusting flow rates and recycling product solution.

As noted above, the current efficiency of the process is largely dependent on the $[Na^+]/[H^+]$ ratio in the anode compartment, which usually requires a deadload of sodium ion cycling between the cell and the chlorine dioxide generator which, in the embodiment disclosed above, may be provided by sodium sulfate as the deadload.

It has been observed that current efficiencies which can be achieved using a cation-exchange membrane divided cell in which sodium hydroxide is produced in the cathode compartment generally do not exceed approximately 80 to 85%. In accordance with one preferred embodiment of the invention, this current efficiency is increased, to greater than about 85%, by minimizing the back-migration of hydroxyl ions from the cathode compartment through the cation-exchange membrane to the acidified solution.

This result may be achieved in a variety of procedures. In one procedure, in a two-compartment cell, a less alkaline catholyte is provided. For example, sodium acid sulfate, usually sodium sesquisulfate, produced by the chlorine dioxide generation operation may be neutralized in the cathode compartment of the cell. The sodium acid sulfate neutralized in this way generally is that proportion of the sodium acid sulfate by-product removed from the chlorine dioxide generator which is intended to be used as a make-up for sulfur losses in the pulp mill or for disposal. Another advantage of the use of sodium acid sulfate in the cathode compartment is that a lower cell voltage can be employed, as a result of the dependence of potential on pH.

Another example of a less alkaline catholyte to minimize back migration of hydroxyl ions is to employ a catholyte in the form of sodium hydroxide solution of low strength.

In addition to improving current efficiency, the employment of a less alkaline catholyte also decreases the negative effect of hardness on membrane life. The effect of hardness also can be minimized by adding a carbonate, such as sodium carbonate, to the cathodic compartment. Both calcium and magnesium carbonates are less soluble than the corresponding hydroxides, and hence their presence lowers the concentration of calcium and magnesium ions, the principal causes of hardness, in the catholyte and minimizes the formation of insoluble hydroxides in the membrane.

The less alkaline catholyte also may be provided by employing a different electrochemical reaction than sodium hydroxide production. One such reaction is the electrosynthesis of dithionite by the electroreduction of bisulfite in the cathode compartment. Another such reaction is the electrosynthesis of sodium chlorite by electroreduction of chlorine dioxide in the cathode compartment.

In another procedure to minimize back-migration of hydroxyl ions, in a three-compartment cell, a buffering electrolyte is provided in the centre compartment. For example, a sodium acid sulfate, usually sodium sesquisulfate, produced by the chlorine dioxide generation operation may be provided as an electrolyte in the centre compartment. The sodium acid sulfate neutralizes any hydroxyl ions migrating from the cathode compartment through the cation exchange membrane and prevents them from passing to the anode compartment. The sodium acid sulfate used in this way generally is that proportion of the sodium acid sulfate by-product removed from the chlorine dioxide generator which is intended to be used as a make-up for sulfur losses in the pulp mill or for disposal.

The electrolyte used as the buffering electrolyte in the centre compartment may be mixtures of sodium chlorate and sodium sulfate, usually a sodium acid sulfate such as sodium sesquisulfate. This electrolyte subsequently may be passed from the centre compartment to the anode compartment for acidification in the manner described above, before passing to the chlorine dioxide generator. In one experiment, it was found that a solution of 1M sodium sesquisulfate and 2M sodium chlorate circulated in both anodic and centre compartments provided an acidified solution at a current efficiency of 89%.

In a further embodiment of the invention, the acidification process can be combined with another useful anodic reaction generating hydrogen ion as charge carriers crossing the ion-exchange membrane. This result can be achieved in a three-compartment cell which is equipped with two cation-exchange membranes, with the aqueous medium to be acidified being forwarded to the middle compartment.

Examples of procedures which may be effected in the compartment adjacent the anode include oxidation of sulfuric acid to form persulfuric acid, using a platinum anode, formation of other peroxy compounds, including peracetic acid, and oxidation of organic compounds, such as aldehydes to acids, in an acidic medium, such as sulfuric acid.

The anode employed in the electrolytic cell may take any desired form, but it is preferred to employ a low overpotential one with respect to the oxygen evolution reaction, for example, a DSA-$O_2$® electrode. Similarly, any convenient material of construction may be used for the cathode, for example, nickel.

The cation-exchange membrane may be formed of any convenient material which enables cations to selectively pass therethrough in preference to anions. Preferably, the cation-exchange membrane is formed of perfluorocarbon polymer having pendant cation-exchange functional groups, such as those sold under the trademarks "NAFION" (DuPont) or "FLEMION" (Asahi Glass).

In the event an additional ion exchange membrane or membranes is used in the anode compartment, such membrane may be formed of any convenient ion-exchange material.

In one embodiment of the invention in which electrodialysis utilizing bipolar membranes is employed, the aqueous solution of a mixture of alkali metal salts is processed in a plurality of unit cells, with each unit cell being separated from the adjacent ones by bipolar membranes. The bipolar membranes have an anionic face in the base compartment of one cell and a cationic face in the acid compartment of an adjacent cell. The individual cells are divided by a cation exchange membrane.

With the plurality of cells separated by bipolar membranes, gas evolution does not take place in the acid and base compartments, and the overall reaction may be represented by the equation:

$$(x+y)\ NaClO_3 +y\ H_2O \rightarrow x\ NaClO_3 +y\ HClO_3 +y\ NaOH$$

The plurality of cells is terminated at both ends by cationic membranes. A separate electrode rinse solution, such as a sodium sulfate solution or sulfuric acid solution, is circulated between the cathodic and anodic compartments adjacent to the cathode and anode respectively. A single electrical current feed, therefore, is used to effect acidification in parallel in a plurality of unit cells, with gaseous evolution occurring only in the end anode and cathode compartments.

Bipolar membranes and their operation are well known and are described, for example, in U.S. Patents Nos. 4,024,043, 4,180,815, 4,057,481, 4,355,116, 4,116,889, 4,253,900, 4,584,246 and 4,673,454 and reference may be had to such patents for details thereof.

If desired, the sodium sesquisulfate first may be converted by metathesis to neutral anhydrous sodium sulfate. The neutral anhydrous sodium sulfate then can be employed as the sodium sulfate which is fed to the cell for acidification.

Such metathesis also provides an opportunity to minimize the hardness content in the saltcake used in the acidification process. Minimization of the hardness has a beneficial effect on the cell performance (i.e. current efficiency) and, in addition, it prolongs the life of the membranes used in the acidification process (both cation-exchange and bipolar). The removal of hardness from sesquisulfate or acid sulfate is a complex and costly process which typically requires neutralization of the saltcake with caustic.

By employing metathesis as described in the aforementioned application, one can not only recover the acid values from the saltcake and provide a source of sodium sulfate for the acidification process but also minimize the cost involved in adding sodium hydroxide to sesquisulfate in order to precipitate ions responsible for hardness ($Ca^{2+}$, $Mg^{2+}$, $Fe^{2+}$, $Fe^{3+}$ etc.).

The parameters of operation of the cell are not critical to the process of the invention and may vary widely. For example, the electrolytic process may be effected under any desired electrolytic conditions, generally at a membrane current density of about 0.01 to about 10 kA/m$^2$, preferably about 1 to about 5 kA/m$^2$.

Similarly, the process may be carried out over a wide range of temperatures, generally from about 0° to about 150°C, preferably from about 15° to about 90°C. Generally, higher temperatures are preferred, in view of the generally greater solubility of the alkali metal salts at higher temperatures, thereby enhancing the [Na$^+$]/[H$^+$] ratio. This greater solubility at high temperature is particularly true of sodium chlorate, so that, when such salt is included in the feed to the cell, higher temperature operation, above about 60°C, is preferred. The acidified product stream from the electrolysis retains a high concentration of sodium chlorate, so that cooling of that product stream prior to passage to the chlorine dioxide generator may lead to precipitation of sodium chlorate, which can be removed and recycled to the cell feed.

As already described, one important parameter influencing current efficiency is the molar ratio of [Na$^+$]/[H$^+$] in the anode compartment. This molar ratio varies from 1000:1 to 1:2. Such a ratio is dependent on the concentration of the feed solution to the anode compartment and the extent to which sodium ions are transferred from the anode compartment to the cathode compartment. Accordingly, it is preferred to employ a feed solution having a concentration of about 0.1 to about 15M in sodium ions and to remove from the anode compartment for feed to the chlorine dioxide generation process an acidified solution having a concentration of about 0.1 to about 12M in sodium ions.

The electrolytic process increases the total acid normality of the alkali metal salt solution. Depending on the initial total acid normality and the degree of electrolysis effected on the feed material, it may be desirable to concentrate, such as by evaporation, the product stream to increase its total acid normality, prior to feed to the chlorine dioxide generation process. Generally, the total acid normality of the feed solution varies from about neutral to about 12 normal, preferably about 0.1 to about 10 normal, and the electrolysis is effected to such a degree as to provide a product stream from the anode compartment having a total acid normality generally from about 0.2 to about 15 normal, preferably about 0.5 to about 6 normal.

DESCRIPTION OF PREFERRED EMBODIMENTS

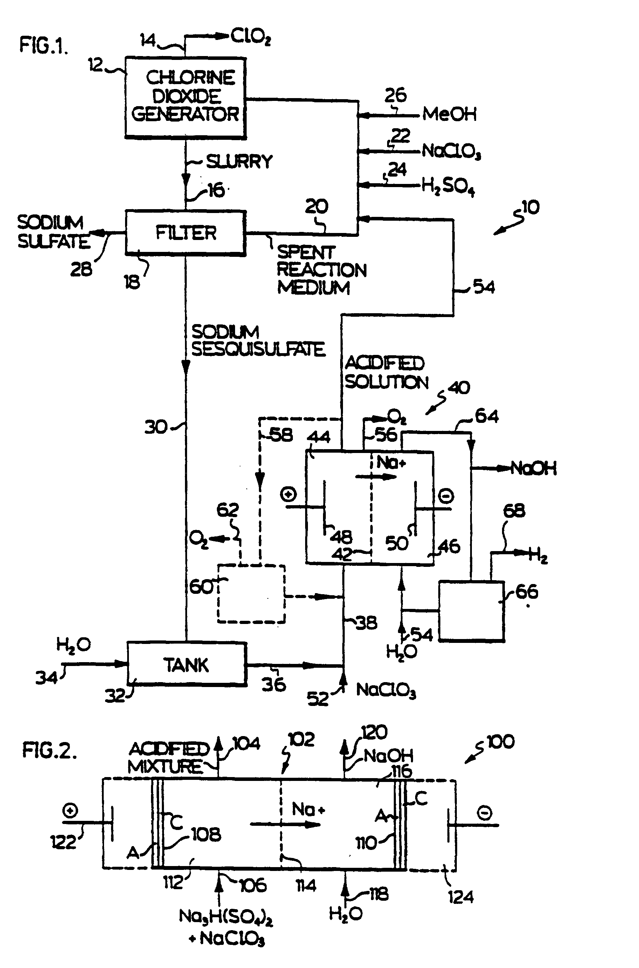

Referring to the drawings, Figure 1 depicts an embodiment of the application of the principles of the present invention to the production of chlorine dioxide.

There is shown therein a chlorine dioxide generating operation 10 comprising a chlorine dioxide generating process 12 wherein sodium chlorate, sulfuric acid and methanol are reacted at the boiling point of the reaction medium under a sub-atmospheric pressure, to produce gaseous chlorine dioxide in line 14 (i.e. the R8 process).

The chlorine dioxide generating process in the generator 12 results in the precipitation of a by-product sodium sulfate, once the reaction medium has become saturated after start-up. The form of the by-product sodium sulfate, namely neutral sodium sulfate, sodium sesquisulfate, sodium bisulfate or mixtures thereof, depends on the total acid normality of the reaction medium, which may vary from about 2 to about 11 normal.

The crystalline sodium sulfate (sometimes termed "saltcake") is removed from the reaction medium in the form of a slurry with spent reaction medium by line 16 and is passed to a filter 18 wherein the crystalline material is separated from the spent reaction medium.

The separated spent reaction medium in line 20 is recycled to the generator 12 with make-up reactants, namely sodium chlorate, sulfuric acid and methanol, being fed to the recycle stream in line 20 by lines 22, 24 and 26 respectively.

The crystalline sodium sulfate separated in the filter 18 may be removed by line 28 for use elsewhere in the pulp mill in whatever proportion (including zero) of the sodium sulfate in the slurry 16 is desired.

The portion of the sodium sulfate not removed by line 28 is forwarded by line 30 to a dissolving tank 32, wherein the sodium sulfate is dissolved in water fed by line 34 to form an aqueous solution which is preferably saturated. This solution is forwarded by lines 36 and 38 to a membrane-divided electrolysis cell 40. It is not necessary that the sodium sulfate be completely dissolved in water, but may be fed as a slurry thereof. Where such a slurry is employed, it is generally desirable to isolate the anode from the slurry in the cell 40, to avoid excessive wear resulting from abrasion.

The cell 40 comprises a cation-exchange membrane 42, which divides the interior of the cell 40 into an anode compartment 44 and a cathode compartment 46 in which are located cell anode 48 and cell cathode 50 respectively.

Sodium chlorate is added to the sodium sulfate solution in line 36 by line 52 to form in line 38 a feed solution for the anode compartment 44 of the cell 40. An electrolyte is fed by line 54 to the cathode compartment 46. A current is applied between the anode 48 and the cathode 50. The sodium chlorate may be added by line 52 in the form of an aqueous solution thereof or as solid sodium chlorate.

In the cell 40, several reactions occur simultaneously. At the anode 48, water is electrolyzed to oxygen and hydrogen ion, as follows:

$$H_2O \rightarrow \tfrac{1}{2}O_2 + 2H^+ + 2e^-$$

while at the cathode 50 water is electrolyzed to hydrogen and hydroxyl ion, as follows:

$$e^- + H_2O \rightarrow \tfrac{1}{2}H_2 + OH^-$$

At the same time, sodium ions in the aqueous solution or slurry of a mixture Of sodium sulfate and sodium chlorate migrate under the influence of the applied current from the anode compartment 44 across the cation-exchange membrane 42 to the cathode compartment 46. In effect, therefore, the electrolytically-produced hydrogen ions replace the sodium ions in the anode compartment 44 and the transferred sodium ions are available to combine with the electrolytically-produced hydroxyl ions in the cathode compartment 46.

The sodium sulfate contained in the solution feed in line 38 to the cell 40 can be considered to be a deadload circulating via the generator 12 in a closed loop, so that the overall reaction in cell 40 can be considered to be represented, as follows:

$$xNaClO_3 + 3H_2O \rightarrow (x-2)\, NaClO_3 + 2HClO_3 + 2NaOH + \tfrac{1}{2}O_2 + H_2$$

where x is the molar amount of sodium chlorate which is processed.

The resulting chloric acid-containing solution then is recycled by line 54 to the recycle line 20, to provide acid and chlorate ion for the chlorine dioxide generator 12. The proportion of sodium sulfate removed from the system by line 28 corresponds to the proportion of the sulfuric acid and sodium chlorate reactants fed to the chlorine dioxide generation from external sources, namely by line 24 for sulfuric acid and by unconverted sodium chlorate in line 24 and in line 22. Under steady state operating conditions for a process precipitating sodium sesquisulfate and where no sodium sulfate product is required, the processing of the aqueous solution of a mixture of sodium sesquisulfate and sodium chlorate in the cell 40 provides all the hydrogen ions and chlorate ions necessary to sustain the reaction and additional sulfuric acid and sodium chlorate are not required.

In effect, therefore, sodium chlorate fed to the cell 40 is converted, at least partially, to chloric acid, so that the sodium sulfate component of the feed solution 38 is a dead-load cycling between the cell 40 and the chlorine dioxide generator 12.

Oxygen is vented from the anode compartment 44 by line 56. Alternatively, the product stream may be recycled by line 58, with oxygen being vented from a gas-liquid separator 60 by line 62, wherein recycle of anolyte is required to achieve the desired acid normality of the acidified solution 54.

The sodium hydroxide produced in the cathode compartment 46 is recycled by line 64, through a gas-liquid separator 66 from which hydrogen is vented by line 68, until the desired concentration of sodium hydroxide solution is achieved. The resulting aqueous sodium hydroxide solution is removed as an aqueous product stream in line 70. This solution has considerable utility in a pulp mill, particularly as a chemical employed in the purifying and bleaching operations effected in the bleach plant of the pulp mill. The gaseous by-products, namely hydrogen and oxygen, also can be utilized in the pulp mill.

High current efficiency for the electrolytic process effected in the cell 40 as described above can be attributed to the high $[Na^+]/[H^+]$ molar ratio in the anode compartment 44 and also to the buffering effect of $SO_4^{2-}$ ions towards hydrogen ions, which tends to maintain the free hydrogen ion concentration in the anode compartment low, thereby tending to maintain the high $[Na^+]/[H^+]$ molar ratio.

As may be seen from the above description, the process of Figure 1 produces chlorine dioxide by the R8 process and hence retains the benefits thereof. More importantly, the process does not produce any excess by-product sodium sulfate requiring disposal. The amount of sodium sulfate which is produced can be tailored to the mill requirement, or may be eliminated entirely. In effect, when there is no requirement for the saltcake in the pulp mill, the sodium sulfate is maintained in a closed loop within the process and the sodium ions introduced to the chlorine dioxide generating process with the sodium chlorate, exit the process in the form of aqueous sodium hydroxide solution. The acid for the chlorine dioxide generating process is produced electrolytically from water, which co-produces the hydroxyl ions required to combine with the sodium ions to form the sodium hydroxide.

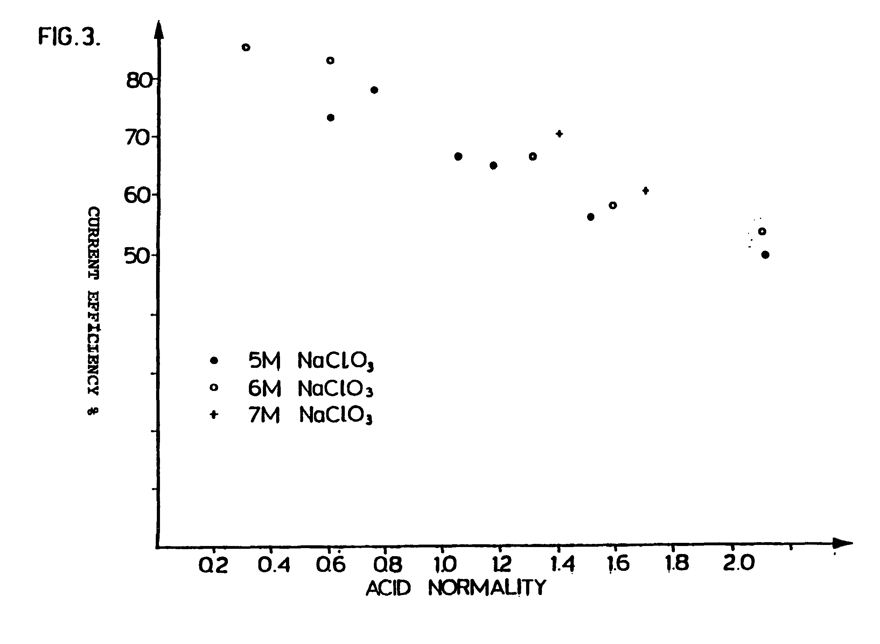

Referring to Figure 2, there is shown therein the utilization of a bank 100 of unit cells, with the individual cells 102 producing an acidified mixture in line 104 for feeding to a chlorine dioxide generator, as described with respect to Figure 1, from an aqueous feed mixture of sodium sesquisulfate and sodium chlorate in line 106. The number of unit cells 102 in the bank of cells may vary widely, depending on the required production capacity and typically may vary from about 20 to about 500.

Each unit cell 100 is separated from each adjacent unit cell by bipolar membranes 108, 110. The bipolar membrane 108 has its cationic face in an acid compartment 112, so as to form hydrogen ions under the influence of the electric current applied to the bank of cells 100, thereby acidifying the feed mixture, while sodium ions are transported from the acid compartment 112 across a cation-exchange membrane 114 to a base compartment 116.

The bipolar membrane 110 has its anionic face in the base compartment 116, so as to form hydroxyl ions from the aqueous feed thereto in line 118 under the influence of the electrical current applied to the bank of cells 100. In this way, sodium hydroxide is formed in the base compartment 116 and is removed by line 120.

Only a single anode 122 and a single cathode 124 are required for the bank 100 of unit cells 102. Oxygen and hydrogen respectively are formed at the electrode surfaces and vented from the terminal unit cells.

EXAMPLES

Electrochemical experiments were carried out in a two-compartment MP cell, supplied by Electrocell AB, Sweden equipped with an oxygen-evolving anode (DSA-O$_2$®), nickel cathode and a cation exchange membrane (NAFION 427) dividing the cell into an anode compartment and a cathode compartment. The anode, cathode and membrane each had an area of 100 sq. cm.

In the experiments, a current density of 3 kA/m$^2$ was mainly employed (occasionally 2 kA/m$^2$), the anolyte was NaClO$_3$ or NaClO$_3$/Na$_2$SO$_4$/H$_2$SO$_4$ mixtures, the catholyte was 1N aqueous sodium hydroxide solution and the temperature was 40° to 50°C.

Example 1 (Comparative)

In a first set of experiments, aqueous solutions of sodium chlorate of various concentrations were used as the anolyte. During the course of electrolysis, the anolyte became enriched with hydrogen ions as the sodium chlorate was partially converted to chloric acid. Current efficiencies were determined at various product chloric add concentrations for the various initial sodium chlorate concentrations and were plotted graphically. These results appear as Figure 3.

It will be seen from the data presented in this Figure that the current efficiency declines with increasing H$^+$ to Na$^+$ mole ratio in the solution electrolyzed.

Example 2

Various mixtures of sodium chlorate and Na$_2$SO$_4$/H$_2$SO$_4$ were prepared and electrolyzed.

(a) 1 L of an approximately 2M Na$_3$H(SO$_4$)$_2$ aqueous solution was prepared by mixing Na$_2$SO$_4$ and H$_2$SO$_4$ at a molar ratio of 3:1. Acidity was measured by titration with NaOH and the solution was determined to have an initial concentration of 1.94 normal. The catholyte was 0.5L of 1 N NaOH.

Current was imposed between the electrodes at a current density of 3 kA/m$^2$ and sodium chlorate crystals, in a total amount corresponding to the preparation of a 2M aqueous solution, were added slowly to the anolyte. A very rapid dissolution of sodium chlorate was observed. The increase in acidity of the anolyte was monitored by titration and the electrolysis was terminated when the acidity of the anolyte reached 4.12 N. The basicity of the catholyte was determined to be 4.54 N NaOH. The total time of electrolysis was 8583 seconds with the total charge passed being 257,490 A.sec.

In the calculation of the current efficiency, the volume changes of the anolyte and catholyte were taken into account, since water is transported to the catholyte together with Na$^+$ ions and also is consumed in the electrolysis. The current efficiency based on the increase in acidity of the anolyte was determined to be 79% while that based on the increase in basicity of the catholyte was 80%.

The overall conversion in the anolyte can be depicted as:

$$2 \text{ M Na}_3\text{H(SO}_4)_2 + 2 \text{ M NaClO}_3 \rightarrow 2 \text{ M Na}_3\text{H (SO}_4)_2 + 2 \text{ M HClO}_3$$

with an equivalent amount of caustic being co-produced in the cathode compartment. Hydrogen (cathode) and oxygen (anode) were the gaseous by-products. All the reactants and products depicted by this equation are largely dissociated in the solution into the ionic species Na$^+$, H$^+$, HSO$_4^-$, SO$_4^{2-}$ and ClO$_3^-$. However, since sesquisulfate contributes a prevailing form of the precipitate formed in the chlorine dioxide generator, chloric acid (HClO$_3$ = H$^+$ + ClO$_3^-$) is liberated from such a mixture upon precipitation of sesquisulfate.

(b) Other mixtures of sodium chlorate and sodium sesquisulfate were processed in a similar way to that described in experiment (a), with quantitative (1 to 3) or partial (4) conversion of the sodium chlorate to chloric acid. The results obtained are reproduced in the following Table I:

TABLE I

| Reactant Expt No. | Concentrations(M) | | Acidity (N) | | Electrolysis Conditions | |
|---|---|---|---|---|---|---|
| | Sesqui | NaC1O$_3$ | Initial | Final | C.D.(kA/m$^2$) | C.E.(%) |
| 1 | 2 | 1.5 | 2.01 | 3.66 | 2 | 81 |
| 2 | 1.75 | 2 | 1.81 | 3.95 | 3 | 76 |
| 3 | 1.5 | 2 | 1.48 | 3.6 | 3 | 75 |
| 4 | 1 | 4 | 0.92 | 2.06 | 3 | 85 |

It will be seen from this Table and the data in (a) above, that an improvement in current efficiency is obtained by the presence of sulfate ion in conjunction with a high [Na$^+$]/[H$^+$] ratio, as compared with the results obtained in Example 1. For example, 1.5 M HClO$_3$ can be obtained at about 60% C.E. in pure aqueous sodium chlorate solution and at about 80% C.E. in the mixtures of sodium sesquisulfate and sodium chlorate.

Example 3

(a) A further set of experiments was carried out with the nickel cathode used in Examples 1 and 2 replaced by a graphite cathode and the cation-exchange membrane being NAFION 417. The anolyte employed was an aqueous solution of 1 M sodium sesqui-sulfate and 2M sodium chlorate and the catholyte employed was an aqueous solution of sodium sesquisulfate ranging in concentration for 0.5 to 1.5M.

The results obtained are set forth in the following Table II:

TABLE II

| Expt No. | Anolyte Acidity (N) | | Catholyte Acidity (N) | | Current Eff. (%) |
|---|---|---|---|---|---|
| | Initial | Final | Initial | Final | |
| 1 | 1.00 | 1.27 | 0.78 | 0.51 | 88 |
| 2 | 0.98 | 1.55 | 0.74 | 0.24 | 89 |
| 3 | 0.97 | 1.80 | 0.74 | -0.05* | 86 |
| 4 | 0.99 | 1.82 | 0.51 | -0.23* | 87 |
| 5 | 0.98 | 1.5 | 0.50 | 0.01 | 88 |

* the cathotyte became alkaline.

As can be seen from the results of Table I I, a higher current efficiency was attainable when hydroxyl ion migration is minimized, in this case by employing sodium sesquisulfate as the catholyte.

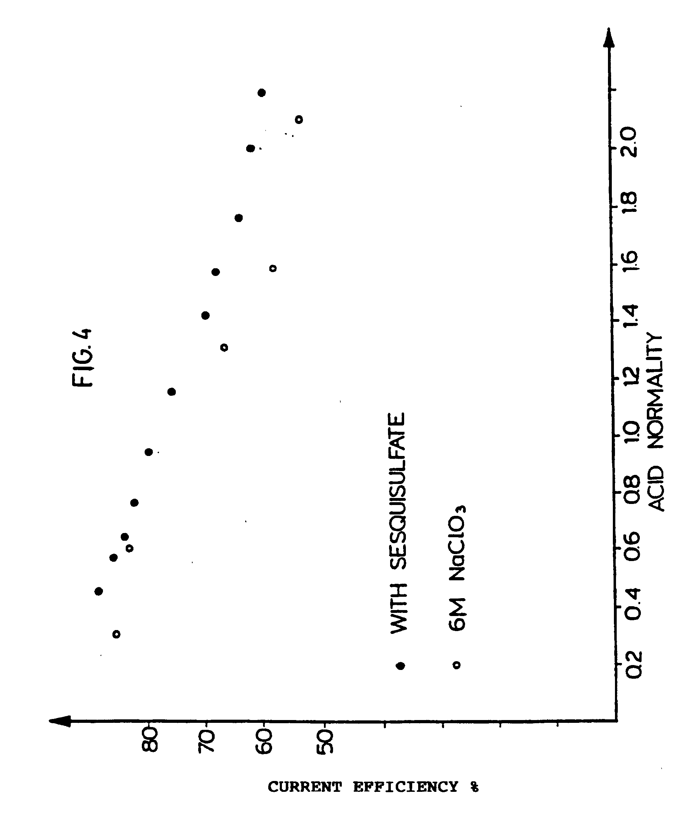

(b) An additional series of experiments was carried out in the cell described in (a) wherein 6 M sodium chlorate solution was used as the anolyte and 1.5 M aqueous solution of sodium sesquisulfate was used as the catholyte. Current efficiencies were determined at various product chloric acid concentrations and were plotted graphically. These results appear in Figure 4.

In Figure 4, there is also reproduced the data of Figure 3 for 6 M chlorate solutions, so that a comparison can be made. As may been seen in Figure 4, the current efficiency declines with increasing H$^+$ to Na$^+$ mole ratio in the solution electrolyzed in both sets of data, but a higher current efficiency is achieved when sodium sesquisulfate is present in the catholyte.

Example 4

A three-compartment cell was set up by modifying the two-compartment cell used in Examples 1 to 3 to have a second cation-exchange membrane (both NAFION 417). To the anodic compartment was fed an aqueous solution of 1M of sodium sesquisulfate and 2M of sodium chlorate, to the centre compartment was fed an aqueous solution of sodium sesquisulfate having a concentration of about 0.5 to 1.5M and to the cathode compartment was fed a 5 wt% aqueous solution of sodium hydroxide. The results are set forth in the following Table III:

TABLE III

| Expt. No. | Duration (Min) | Acidity Change in Anolyte (mmols of $H^+$) | Centre Compartment Composition | Acidity Change (mmols of $H^+$) | Basicity Change in Catholyte (mmols of $OH^-$) | Current Efficiency | |
|---|---|---|---|---|---|---|---|
| | | | | | | Anolyte | Catholyte |
| 1 | 185 | +3098 | 1.13M | -265 | +2585 | 90 | 75 |
| 2 | 167 | +2755 | 1.03M | -267 | +2410 | 88 | 77' |
| 3 | 164 | +2662 | 0.69M | -330 | +2417 | 87 | 79 |

The results of foregoing Table III again show that a higher current efficiency was attainable when hydroxyl ion migration is minimized, in this case by employing an acid feed to a central compartment separating the anode and cathode compartments.

SUMMARY OF DISCLOSURE

In summary of this disclosure, the present invention provides a novel electrochemical process which enable the quantity of by-product sodium sulfate produced by a chlorine dioxide generating process to be decreased. Modifications are possible within the scope of this invention.

**Claims**

**1.**   A method for the production of chlorine dioxide, comprising the steps :

providing an aqueous acid chlorine dioxide-generating reaction medium containing sulfuric acid and alkali metal ions in a reaction zone,
maintaining said aqueous acid reaction medium at its boiling point while a subatmospheric pressure is applied to the reaction zone,
forming an aqueous solution of a mixtures of alkali metal chlorate and alkali metal sulfate from solid phase materials, said aqueous solution containing alkali metal ions and hydrogen ions in a motor ratio of from 1000: 1 to 1:2,
electrochemically acidifying at a current efficiency of at least 70%, preferably at least 80%, said aqueous solution ,
electrochemically removing alkali metal ion from said aqueous solution to produce an acidified alkali metal salt feed solution,
forwarding said acidified alkali metal salt feed solution as an acidified chlorate ion-containing solution to said reaction zone to provide chlorate ion and hydrogen ion reactants to said aqueous acid chlorine dioxide-generating reaction medium,
crystallizing an alkali metal sulfate from said aqueous acid reaction medium in said reaction zone, and recovering from said reaction zone an alkali metal sulfate.

**2.**   A method as claimed in claim 1, wherein said electrochemical acidification of said aqueous solution of at least one alkali metal salt and electrochemical removal of alkali metal ions are affected simultaneously by:

providing an electrolytic cell comprising a cation-exchange membrane dividing said cell into an anode compartment and a cathode compartment,
feeding said aqueous solution of at least one alkali metal salt to said anode compartment,
electrolytically producing hydrogen ions in said anode compartment while simultaneously effecting transfer of alkali metal cations from said anode compartment through said cation-exchange membrane to said cathode compartment, and
removing said acidified alkali metal salt solution from said anode compartment, and, optionally, recirculating said acidified alkali metal salt solution through the anode compartment until the desired acidity is achieved.

**3.**   A method as claimed in claim 1, wherein said electrochemical acidification of said aqueous solution of at least one alkali metal salt and electrochemical removal of alkali metal ions are effected simultaneously by:

providing an electrolytic cell comprising first and second cation exchange membranes dividing said cell into an anode compartment, a central compartment and a cathode compartment,
feeding said aqueous solution of at least one alkali metal salt to said central compartment,
electrolytically producing hydrogen ions in said anode compartment and transferring said hydrogen ions through one cation-exchange membrane to said central compartment while simultaneously effecting transfer of alkali metal cations from said central compartment through the other cation-exchange membrane to the cathode compartment, and
removing said acidified alkali metal salt solution from said central compartment, and, optionally, recirculating said acidified alkali metal salt solution through said central compartment until the desired acidity is achieved.

**4.**   A method as claimed in claim 3, wherein an aqueous sulfuric acid solution is fed to said anode compartment, and, optionally, oxidation of sulfuric acid to persulfuric acid is effected in said anode compartment.

**5.**   A method as claimed in any one of claims 1 to 4, wherein said alkali metal sulfate is selected from neutral sodium sulfate, sodium sesquisulfate, sodium bisulfate and mixtures thereof.

6. A method as claimed in any one of claims 2 to 5, wherein the electrolytic production of hydrogen ions is effected at a membrane current density of 0.01 to 10 kA/m$^2$.

7. A method as claimed in claim 6, wherein said membrane current density is 1 to 5 kA/m$^2$.

8. A method as claimed in any one of claims 2 to 7, wherein hydroxyl ions are electrolytically produced in said cathode compartment simultaneous with said electrolytic production of hydrogen ions in said anode compartment, and, optionally an alkali metal hydroxyl solution is removed from said cathode compartment, and, when said alkali metal hydroxide solution is removed, optionally, recirculating the same through said cathode compartment until the desired concentration is achieved.

9. A method as claimed in claim 8, wherein back migration of hydroxyl ions produced in said cathode compartment through said cation-exchange membrane is minimized.

10. A method as claimed in claim 9, wherein a sodium acid sulfate is fed to said cathode compartment to be at least partially neutralized by hydroxyl ions produced in said cathode compartment.

11. A method as claimed in any one of claims 8 to 10, wherein sodium carbonate is added to said cathode compartment to decrease the hardness of the catholyte.

12. A method as claimed in claim 9, wherein electrosynthesis of sodium dithionite is effected in said cathode compartment by electroreduction of bisulphite therein, or electrosynthesis of sodium chlorite is effected in said cathode compartment by electroreduction of chlorine dioxide.

13. A method as claimed in any one of claims 8 to 12, wherein a further cation-exchange membrane is provided in said electrolytic cell providing a central compartment between said anode compartment and said cathode compartment, and a buffering electrolyte, optionally an aqueous solution of a sodium acid sulfate, with respect to hydroxyl ions is fed to said central compartment.

14. A method as claimed in claim 13 wherein said aqueous solution of a sodium acid sulfate is comprised at least in part by a by-product from the chlorine dioxide generating process.

15. A method as claimed in claim 13 or 14, wherein an aqueous solution of sodium chlorate and sodium acid sulfate is fed to said central compartment as said buffering electrolyte and subsequently is forwarded to said anode compartment.

16. A method as claimed in any one of claims 1 to 15, wherein said aqueous solution of at least one alkali metal salt comprises an aqueous solution of sodium sulfate and sodium chlorate, optionally in the form of a slurry.

17. A method as claimed in claim 16, wherein said sodium sulfate comprises sodium sesquisulfate from a sulfuric acid-based chlorine dioxide generating process.

18. A method as claimed in claim 16 or 17, wherein said aqueous solution of sodium sulfate and sodium chlorate contains sufficient sodium ions to provide in said anode compartment said molar ratio during said electrolytic production of hydrogen ions.

19. A method as claimed in any one of claims 16 to 18, wherein said anode compartment is provided with an additional separator between the anode and the feed stream.

20. A method as claimed in any one of claims 16 to 19, wherein said electrolytic cell comprises one unit cell of a multiple number of unit cells each separated by bipolar membranes and having an anode and a cathode in terminal compartments located one at each end of the multiple number of unit cells, and said aqueous solution of sodium sulfate and sodium chlorate is fed in parallel streams to the acid compartment of each unit cell and said acidified solution is removed in parallel streams from the acid compartment of each unit cell, and, optionally, hydroxyl ions are electrolytically produced in the base compartment of each unit cell simultaneously with the electrolytic production of hydrogen ions in the acid compartment of each unit cell, and an aqueous sodium hydroxide solution is removed from each base compartment of each unit cell.

**21.** A method as claimed in claim 1 or 5, wherein said electrochemical acidification of said aqueous solution of at least one alkali metal salt is effected by anodic hydrogen gas oxidation to hydrogen ions and addition of said hydrogen ions to said aqueous solution, and said electrochemical removal of alkali metal ions is effected by transfer of alkali metal ions from said aqueous solution across a cation-exchange membrane to a recipient medium, and, optionally, cathodic electroreduction of oxygen gas is effected whereby said anodic and cathodic reactions constitute a fuel cell producing electrical energy, and, optionally, cathodic reduction of water is effected in said recipient medium to produce hydrogen and hydroxyl ions to combine with said transferred alkali metal ions to form an aqueous alkali metal hydroxide solution, and said hydrogen is fed to said anodic hydrogen gas oxidation.

**22.** A method as claimed in claim 1 or 5, wherein said electrochemical acidification of said aqueous solution of at least one alkali metal salt is effected by anodic oxidation of water in said aqueous solution to hydrogen ions and oxygen and said electrochemical removal of alkali metal ions is effected by transfer of alkali metal ions from said aqueous solution across a cation-exchange membrane to a recipient medium, and, optionally, cathodic electroreduction of said oxygen is effected.

**Patentansprüche**

**1.** Verfahren zur Herstellung von Chlordioxid, daß die Schritte

Schaffung eines wässrigen sauren Chlordioixd erzeugenden Reaktionsmediums, das Schwefelsäure und Alkalimetallionen in einer Reaktionszone enthält,

Halten des wässrigen sauren Reaktionsmediums bei seiner Siedetemperatur während ein Unterdruck in der Reaktionszone erzeugt wird,

Bildung einer wässrigen Lösung aus eine Mischung eines Alkalimetallchlorats und eines Alkalimetallsulfats aus Festphasenmaterialien, diese wässrige Lösung enthält Alkalimetallionen und Wasserstoffionen in einem molaren Verhältnis von 1000:1 bis 1:2,

elektrochemisches Ansäuern der wässrigen Lösung mit einer Stromausbeute von wenigstens 70 %, vorzugsweise wenigstens 80 %,

elektrochemische Entfernung von Alkalimetallionen aus der wässrigen Lösung, um eine angesäuerte alkalische Beladung aus Alkalimetallsalz herzustellen,

Zuführung der angesäuerten Beladungslösung aus Alkalimetallsalz als eine angesäuerte Chlorationen-enthaltende Lösung in die Reaktionszone, um in dem wässrigen sauren Chlordioxid-erzeugenden Reaktionsmedium Chlorationen und Wasserstoffionen als Reaktionspartner zu schaffen,

Kristallisation eines Alkalimetallsulfats aus dem wässrigen sauren Reaktionsmedium in der Reaktionszone, und Wiedergewinnung eine Alkalimetallsulfats aus der Reaktionszone, umfaßt.

**2.** Verfahren nach Anspruch 1, bei dem die elektrochemische Ansäuerung der wässrigen Lösung mit wenigstens einem Alkalimetallsalz und die elektrochemische Entfernung der Alkalimetallionen gleichzeitig bewirkt wird, durch:

Schaffung einer elektrolytischen Zelle, die eine Kationen-Austauschmembran umfaßt, die die Zelle in einen Anodenraum und einen Kathodenraum teilt,
Zuführung der wässrigen Lösung mit wenigstens einem Alkalimetallsalz in den Anodenraum,
elektrolytische Erzeugung von Wasserstoffionen in dem Anodenraum während gleichzeitig der Transfer von Alkalimetallkationen aus dem Anodenraum durch die Kationen-Austauschmembran in den Kathodenraum bewirkt wird, und
Entfernung der angesäuerten Alkalimetallsalzlösung aus dem Anodenraum, und gegebenenfalls rezirkuliert die angesäuerte Alkalimetallsalzlösung durch den Anodenraum, bis die gewünschte Acidität erreicht ist.

**3.** Verfahren nach Anspruch 1, bei dem die elektrochemische Ansäuerung der wässrigen Lösung mit wenigstens einem Alkalimetallsalz und die elektrochemische Entfernung der Alkalimetallionen gleichzeitig bewirkt wird, durch:

Schaffung einer elektrochemischen Zelle, die eine erste und eine zweite Kationen-Austauschmembran umfaßt, die die Zelle in einen Anodenraum, einen mittleren Raum und einen Kathodenraum teilt,
Zuführung der wässrigen Lösung mit wenigstens einem Alkalimetallsalz in den mittleren Raum,
elektrolytische Erzeugung von Wasserstoffionen in dem Anodenraum und Überführung der Wasserstoffionen durch eine der Kationen-Austauschmembranen in den mittleren Raum, während gleichzeitig der Transfer von Alkalimetallkationen aus dem mittleren Raum durch die andere Kationen-Austauschmembran in den Kathodenraum bewirkt wird, und

Entfernung der angesäuerten Alkalimetallsalzlösung aus dem mittleren Raum, und gegebenenfalls rezirkuliert die angesäuerten Alkalimetallsalzlösung durch den Anodenraum, bis die gewünschte Acidität erreicht ist.

4.  Verfahren nach Anspruch 3, bei dem eine wässrige Schwefelsäurelösung in den Anodenraum geführt wird und gegebenenfalls die Oxidation von Schwefelsäure zu Perschwefelsäure in dem Anodenraum bewirkt wird.

5.  Verfahren nach einem der Ansprüche 1 bis 4, bei dem das Alkalimetallsulfat ausgewählt wird aus der Gruppe aus neutralem Natriumsulfat, Natriumsesquisulfat, Natriumbisulfat und deren Mischungen.

6.  Verfahren nach einem der Ansprüche 1 bis 5, bei dem die elektrolytische Herstellung von Wasserstoffionen bei einer Membranstromdichte von 0,01 bis 10 kA/m$^2$ bewirkt wird.

7.  Verfahren nach Anspruch 6, bei dem die Membranstromdichte 1 bis 5 kA/m$^2$ beträgt.

8.  Verfahren nach einem der Ansprüche 2 bis 7, bei dem Hydroxylionen elektrolytisch in dem Kathodenraum gleichzeitig mit der elektrolytischen Herstellung von Wasserstoffionen in dem Anodenraum erzeugt werden, und gegebenenfalls eine Alkalimetallhydroxyllösung aus dem Kathodenraum entfernt wird und wenn die Alkalimetallhydroxydlösung entfernt wird, gegebenenfalls dieselbe durch den Anodenraum zirkuliert, bis die gewünschte Konzentration erreicht ist.

9.  Verfahren nach Anspruch 8, bei dem die Rückmigration der Hydroxylionen, die in dem Kathodenraum erzeugt wurden, durch die Kationen-Austauschmembran minimiert ist.

10. Verfahren nach Anspruch 9, bei dem ein Natriumsäuresulfat durch den Kathodenraum geführt wird, um wenigstens teilweise durch Hydroxylionen, die in dem Kathodenraum erzeugt werden, neutralisiert zu werden.

11. Verfahren nach einem der Ansprüche 8 bis 10, bei dem Natriumcarbonat in dem Kathodenraum gegeben wird, um die Härte des Katholyten zu vermindern.

12. Verfahren nach Anspruch 9, bei dem die Elektrosynthese von Natriumdithionit in dem Kathodenraum durch Elektroreduktion des Bisulphits darin bewirkt wird oder die Elektrosynthese von Natriumchlorit in dem Kathodenraum durch Elektroreduktion von Chlordioxid bewirkt wird.

13. Verfahren nach einem der Ansprüche 8 bis 12, bei dem eine weitere Kationen-Austauschmembran in der elektrolytischen Zelle vorhanden ist, wodurch ein mittlerer Raum zwischen dem Anodenraum und dem Kathodenraum und einem Pufferelektrolyten, gegebenenfalls einer wässrigen Lösung Natriumhydrogensulfat im Hinblick auf die dem mittleren Raum zugeführten Hydroxylionen, geschaffen wird.

14. Verfahren nach Anspruch 13, bei dem die wässrige Lösung des Natriumhydrogensulfats wenigstens teilweise als Nebenprodukt bei dem Chlordioxidherstellungsverfahren vorhanden ist.

15. Verfahren nach einem der Ansprüche 13 oder 14, bei dem eine wässrige Natriumchloratlösung und Natriumhydrogensulfat dem mittleren Raum als Pufferelektrolyt zugeführt werden und nachfolgend dem Anodenraum zugeführt werden.

16. Verfahren nach einem der Ansprüche 1 bis 15, bei dem die wässrige Lösung aus wenigstens einem Alkalimetallsalz eine wässrige Lösung aus Natriumsulfat und Natriumchlorat, gegebenenfalls in Form einer Aufschlämmung umfaßt.

17. Verfahren nach Anspruch 16, bei dem das Natriumsulfat ein Natriumsesquisulfat aus einem auf Schwefelsäure basierenden Chlordioxidherstellungsverfahren umfaßt.

18. Verfahren nach einem der Ansprüche 16 oder 17, bei dem die wässrige Lösung aus Natriumsulfat und Natriumchlorat eine ausreichende Menge an Natriumionen enthält, um in dem Anodenraum genügend Natriumionen im molaren Verhältnis während der elektrolytischen Produktion von Wasserstoffionen zu schaffen.

19. Verfahren nach einem der Ansprüche 16 bis 18, bei dem der Anodenraum mit einem zusätzlichen Separator zwischen der Anode und dem Zustrom ausgestattet ist

**20.** Verfahren nach einem der Ansprüche 16 bis 19, bei dem die elektrolytische Zelle eine Elementarzelle mit einer Vielzahl von Elementarzellen umfaßt, die jeweils durch bipolare Membranen voneinander getrennt sind und eine Anode und eine Kathode in Klemmkammern aufzuweisen, die an einem Ende der Vielzahl von Elementarzellen angeordnet sind, und die wässrige Lösung aus Natriumsulfat und Natriumchlorat in parallelen Zuströmen in den sauren Raum jeder Elementarzelle zugeführt wird und die angesäuerte Lösung wird in parallelen Strömen aus dem sauren Raum jeder Elementarzelle entfernt, und gegebenenfalls Hydroxylionen in dem Basisraum jeder Elementarzelle gleichzeitig mit der elektrolytischen Herstellung von Wasserstoffionen in dem sauren Raum jeder Elementarzelle erzeugt werden und eine wässrige Natriumhydroxidlösung aus jedem Basisraum jeder Elementarzelle entfernt wird.

**21.** Verfahren nach einem der Ansprüche 1 oder 5, bei dem die eletrochemische Ansäuerung der wässrigen Lösung mit wenigstens einem Alkalimetallsalz durch anodische Wasserstoffgasoxidation zu Wasserstoffionen und Zugabe der Wasserstoffionen zu der wässrigen Lösung bewirkt wird und die elektrochemische Entfernung der Alkalimetallionen durch den Transfer von Alkalimetallionen aus der wässrigen Lösung über die Kationen-Austauschmembran in ein Rezipientmedium bewirkt wird und gegebenenfalls kathodische Elektroreduktion von Sauerstoffgas bewirkt wird, wobei die anodischen und kathodischen Reaktionen eine Brennstoffzelle bilden, die elektrische Energie produziert und gegebenenfalls kathodische Reduktion von Wasser in dem Rezipientmedium bewirkt wird, um Wasserstoff- und Hydroxylionen zu erzeugen, um sich mit den übertragenen Alkalimetallionen zu verbinden, um eine wässrige Alkalimetallhydroxidlösung zu bilden und der Wasserstoff der anodischen Wasserstoffgasoxidation zugeführt wird.

**22.** Verfahren nach einem der Ansprüche 1 oder 5, bei dem die eletrochemische Ansäuerung der wässrigen Lösung mit wenigstens einem Alkalimetallsalz durch anodische Oxidation von Wasser in der wässirgen Lösung zu Wasserstoffionen und Sauerstoff bewirkt wird und die elektrochemische Entfernung von Alkalimetallionen durch den Transfer von Alkalimetallionen aus der wässrigen Lösung über die Kationen-Austauschmembran in ein Rezipientmedium bewirkt wird, und gegebenenfalls eine kathodische Elektroreduktion des Sauerstoffs durchgeführt wird.

**Revendications**

**1.** Procédé de production de dioxyde de chlore, comprenant les étapes :

de fourniture d'un milieu réactionnel acide aqueux générant du dioxyde de chlore contenant de l'acide sulfurique et des ions de métal alcalin dans une zone de réaction ;
de maintien dudit milieu réactionnel acide aqueux à son point d'ébullition, sous une pression inférieure à la pression atmosphérique appliquée à la zone de réaction ;
de formation d'une solution aqueuse de mélange de chlorate de métal alcalin et de sulfate de métal alcalin à partir de matériaux en phase solide, ladite solution aqueuse contenant des ions de métal alcalin et des ions hydrogène dans un rapport molaire allant de 1000:1 à 1:2 ;
d'acidification électrochimique à un rendement de courant d'au moins 70 %, de préférence au moins 80 %, de ladite solution aqueuse;
d'élimination électrochimique des ions de métal alcalin de ladite solution aqueuse pour produire une solution de charge acidifiée de sel de métal alcalin ;
de transfert de ladite solution de charge acidifiée de sel de métal alcalin sous forme d'une solution acidifiée contenant des ions chlorate vers ladite zone de réaction pour fournir les réactifs ions chlorate et ions hydrogène audit milieu réactionnel acide aqueux générant du dioxyde de chlore ;
de cristallisation de sulfate de métal alcalin dans ledit milieu réactionnel acide aqueux dans ladite zone de réaction ; et de récupération dans ladite zone de réaction d'un sulfate de métal alcalin.

**2.** Procédé selon la revendication 1, dans lequel ladite acidification électrochimique de ladite solution aqueuse d'au moins un sel de métal alcalin et l'élimination électrochimique des ions de métal alcalin sont effectuées simultanément par

l'utilisation d'une cellule électrolytique comprenant une membrane échangeuse de cations divisant ladite cellule en un compartiment anodique et un compartiment cathodique ;
l'introduction de ladite solution aqueuse d'au moins un sel de métal alcalin dans ledit compartiment anodique ;
la production électrolytique d'ions hydrogène dans ledit compartiment anodique avec transfert simultané de cations de métal alcalin duditcompartiment anodique à travers ladite membrane échangeuse de cations vers ledit compartiment cathodique ; et

l'élimination de ladite solution acidifiée de sel de métal alcalin dudit compartiment anodique et, éventuellement, la recirculation de ladite solution acidifiée de sel de métal alcalin à travers le compartiment anodique, jusqu'à l'obtention de l'acidité souhaitée.

3. Procédé selon la revendication 1, dans lequel ladite acidification électrochimique de ladite solution aqueuse d'au moins un sel de métal alcalin et l'élimination électrochimique des ions de métal alcalin sont effectuées simultanément par

l'utilisation d'une cellule électrolytique comprenant une première et une deuxième membranes échangeuses de cations divisant ladite cellule en un compartiment anodique, un compartiment central et un compartiment cathodique ;

l'introduction de ladite solution aqueuse d'au moins un sel de métal alcalin dans ledit compartiment central ;

la production électrolytique d'ions hydrogène dans ledit compartiment anodique et le transfert desdits ions hydrogène à travers une membrane échangeuse de cations vers ledit compartiment central en effectuant simultanément le transfert des cations de métal alcalin dudit compartiment central à travers l'autre membrane échangeuse de cations vers le compartiment cathodique, et l'élimination de ladite solution acidifiée de sel de métal alcalin dudit compartiment central ; et,

éventuellement, la recirculation de ladite ' solution acidifiée de sel de métal alcalin à travers ledit compartiment central jusqu'à l'obtention de l'acidité souhaitée.

4. Procédé selon la revendication 3, dans lequel une solution aqueuse d'acide sulfurique' est introduite dans ledit compartiment anodique et, éventuellement, l'oxydation de l'acide sulfurique en acide persulfurique est effectuée dans ledit compartiment anodique.

5. Procédé selon l'une quelconque des revendications 1 à 4, dans lequel ledit sulfate de métal alcalin est choisi parmi le sulfate de sodium neutre, le sesquisulfate de sodium, le bisulfate de sodium et leurs mélanges.

6. Procédé selon l'une quelconque des revendications 2 à 5, dans lequel la production électrolytique d'ions hydrogène est effectuée avec une densité de courant à la membrane comprise entre 0,01 et 10 kA/m$^2$.

7. Procédé selon la revendication 6, dans lequel ladite densité de courant à la membrane est comprise entre 1 et 5 kA/m$^2$.

8. Procédé selon l'une quelconque des revendications 2 à 7, dans lequel des ions hydroxyle sont produits électrolytiquement dans ledit compartiment cathodique, en même temps que ladite production électrolytique d'ions hydrogène dans ledit compartiment anodique et, facultativement, une solution d'hydroxyde de métal alcalin est éliminée dudit compartiment cathodique et, lorsque ladite solution d'hydroxyde de métal alcalin est éliminée, la recirculation éventuelle de celle-ci à travers ledit compartiment cathodique jusqu'à ce que la concentration souhaitée soit réalisée.

9. Procédé selon la revendication 8, dans lequel la migration inverse des ions hydroxyle produits dans ledit compartiment cathodique à travers ladite membrane échangeuse de cations est minimisée.

10. Procédé selon la revendication 9, dans lequel du sulfate acide de sodium est introduit dans ledit compartiment cathodique pour être neutralisé, au moins partiellement, par les ions hydroxyle produits dans ledit compartiment cathodique.

11. Procédé selon l'une quelconque des revendications 8 à 10, dans lequel du carbonate de sodium est ajouté dans ledit compartiment cathodique afin de diminuer la dureté du catholyte.

12. Procédé selon la revendication 9, dans lequel l'électrosynthèse du dithionite de sodium est effectuée dans ledit compartiment cathodique par l'électroréduction du bisulfite, ou l'électrosynthèse du chlorite de sodium est effectuée dans ledit compartiment cathodique par l'électroréduction du dioxyde de chlore.

13. Procédé selon l'une quelconque des revendications 8 à 12, dans lequel une membrane échangeuse de cations supplémentaire est disposée dans ladite cellule électrolytique comportant un compartiment central entre ledit compartiment anodique et ledit compartiment cathodique, et dans lequel un électrolyte tampon, éventuellement une solution aqueuse de sulfate acide de sodium par rapport aux ions hydroxyle, est introduit dans ledit compartiment central.

**14.** Procédé selon la revendication 13, dans lequel ladite solution aqueuse de sulfate acide de sodium est constituée, au moins partiellement, d'un sous-produit provenant de l'opération de production de dioxyde de chlore.

**15.** Procédé selon la revendication 13 où 14, dans lequel une solution aqueuse de chlorate de sodium et de sulfate acide de sodium -est introduite dans ledit compartiment central pour former ledit électrolyte tampon et est envoyée ensuite audit compartiment anodique.

**16.** Procédé selon l'une quelconque des revendications 1 à 15, dans lequel ladite solution aqueuse d'au moins un sel de métal alcalin comprend une solution aqueuse de sulfate de sodium et de chlorate de sodium, éventuellement sous la forme d'une suspension.

**17.** Procédé selon là revendication 16, dans lequel ledit sulfate de sodium comprend du sesquisulfate de sodium provenant de l'opération de production de dioxyde de chlore basée sur l'acide sulfurique.

**18.** Procédé selon la revendication 16 ou 17, dans lequel ladite solution aqueuse de sulfate de sodium et de chlorate de sodium contient suffisamment d'ions sodium pour assurer, dans ledit compartiment anodique, ledit rapport molaire pendant ladite production électrolytique d'ions hydrogène.

**19.** Procédé selon l'une quelconque des revendications 16 à 18, dans lequel ledit compartiment anodique comporte un séparateur supplémentaire entre l'anode et le courant d'alimentation.

**20.** Procédé selon l'une quelconque des revendications 16 à 19, dans lequel ladite cellule électrolytique comprend une cellule unitaire formée d'un nombre multiple de cellules unitaires séparées chacune par des membranes bipolaires et ayant une anode et une cathode dans les compartiments extrêmes situés chacun à une extrémité du nombre multiple de cellules unitaires, et dans lequel ladite solution aqueuse de sulfate de sodium et de chlorate de sodium est introduite en courants parallèles dans le compartiment acide de chaque cellule unitaire, et ladite solution acidifiée est éliminée en courants parallèles dudit compartiment acide de chaque cellule unitaire et, éventuellement, des ions hydroxyle sont produits électrolytiquement dans le compartiment alcalin de chaque cellule unitaire, en même temps que la production électrolytique d'ions hydrogène dans le compartiment acide de chaque cellule unitaire,et une solution aqueuse d'hydroxyde de sodium est éliminée de chaque compartiment alcalin de chaque cellule unitaire.

**21.** Procédé selon la revendication 1 ou 5, dans lequel ladite acidification électrochimique de ladite solution aqueuse d'au moins un sel de métal alcalin est effectuée par oxydation anodique de l'hydrogène gazeux en ions hydrogène, et l'addition desdits ions hydrogène à ladite solution aqueuse et ledit enlèvement électrochimique d'ions de métal alcalin est effectué par transfert d'ions de métal alcalin de ladite solution aqueuse à travers une membrane échangeuse de cations vers un milieu de réception et, éventuellement, l'électroréduction cathodique de l'oxygène gazeux est effectuée et dans lequel lesdites réactions anodique et cathodique constituent une pile à combustible produisant de l'énergie électrique et, éventuellement, la réduction cathodique de l'eau est effectuée dans ledit milieu récepteur pour produire de l'hydrogène et des ions hydroxyle à combiner avec lesdits ions de métal alcalin à transférer pour former une solution aqueuse d'hydroxyde de métal alcalin, et ledit hydrogène est transféré vers l'oxydation anodique dudit hydrogène gazeux.

**22.** Procédé selon la revendication 1 ou 5, dans lequel ladite acidification électrochimique de ladite solution aqueuse d'au moins un sel de métal alcalin est effectuée par oxydation anodique de l'eau dans ladite solution aqueuse en ions hydrogène et oxygène, et ledit enlèvement électrochimique d'ions de métal alcalin est effectué par transfert d'ions de métal alcalin de ladite solution aqueuse à travers une membrane échangeuse de cations vers un milieu récepteur, et, éventuellement, l'électroréduction cathodique dudit oxygène est effectuée.

FIG.1.

FIG.2.

FIG.3.

CURRENT EFFICIENCY %

ACID NORMALITY

● 5M NaClO₃
○ 6M NaClO₃
+ 7M NaClO₃

FIG.4

• WITH SESQUISULFATE

o 6M NaClO₃